Europäisches Patentamt

European Patent Office

Office européen des brevets

(11) Publication number: **0 468 462 A2**

## (12) EUROPEAN PATENT APPLICATION

(21) Application number: **91112352.9**

(22) Date of filing: **23.07.91**

(51) Int. Cl.⁵: **C08L 77/00, C08L 51/04**

(30) Priority: **24.07.90 JP 194066/90**

(43) Date of publication of application:
**29.01.92 Bulletin 92/05**

(84) Designated Contracting States:
**DE FR GB**

(71) Applicant: **MITSUBISHI RAYON CO., LTD.**
**3-19, Kyobashi 2-chome Chuo-Ku**
**Tokyo 104(JP)**

(72) Inventor: **Mori, Hiroshi, c/o Otake Plants**
**Mitsubishi Rayon Co., Ltd., 20-1, Miyuki-cho**
**Otake-shi, Hiroshima 739-06(JP)**
Inventor: **Shigemitsu, Hideyuki, c/o Otake**
**Plants**
**Mitsubishi Rayon Co., Ltd., 20-1, Miyuki-cho**
**Otake-shi, Hiroshima 739-06(JP)**

(74) Representative: **TER MEER - MÜLLER -**
**STEINMEISTER & PARTNER**
**Mauerkircherstrasse 45**
**W-8000 München 80(DE)**

(54) **Resin compositions excellent in impact resistance and heat stability.**

(57) A thermoplastic resin composition comprising a blend obtained by blending the following components (A), (B) and (C):

(A) 10 to 90 parts by weight of a polyamide,

(B) 90 to 10 parts by weight of a compound rubber graft copolymer obtained by graft-polymerizing 5 to 13 parts by weight of at least one vinyl monomer (B-2) selected from the group consisting of vinyl cyanide monomers, aromatic vinyl monomers and (meth)acrylate monomers onto 87 to 95 parts by weight of a compound rubber (B-1), the total amount of (B-1) and (B-2) being 100 wt.% based on the compound rubber graft copolymer, the compound rubber (B-1) consisting of 10 to 90 wt.% of a polyorganosiloxane rubber component (b-1) and 90 to 10 wt.% of a polyalkyl (meth)acrylate rubber component (b-2), the total amount of (b-1) and (b-2) being 100 wt.% based on the compound rubber (B-1), and the compound rubber (B-1) having such a structure that the both rubber components are not separable from each other, and

(C) 0 to 80 parts by weight of a polymer obtained by polymerizing at least one member selected from the group consisting of vinyl cyanide monomers, aromatic vinyl monomers and (meth)acrylate monomers, so that the total amount of the components (A), (B) and (C) is 100 parts by weight, and

(D) 0 to 100 parts by weight of a reinforcing filler.

According to the present invention, by blending the afore-mentioned particular compound rubber graft copolymer, it is possible to give impact resistance and heat stability to a polyamide resin excellent in properties such as chemical resistance, moldability and abrasion resistance, and also to give excellent appearance to molded products of the polyamide resin. Consequently, the resin composition of the present invention is very useful as a material for automobile parts, electric and electronic parts, etc.

EP 0 468 462 A2

BACKGROUND OF THE INVENTION

Field of the Invention

The present invention relates to a thermoplastic resin composition improved in impact resistance and heat stability.

Description of the Prior Art

A polyamide resin is superior in properties such as chemical resistance, moldability, abrasion resistance, etc., so that it is used in wide fields such as automobile parts, electric and electronic parts, etc. However, the resin is poor in impact resistance, particularly in the impact strength of notched samples, so that its range of use is fairly limited. The study of a resin composition is therefore carried out with the object of improving the impact resistance of the polyamide resin. For example, a method of blending the polyamide resin and an ABS resin is disclosed in USP 3,134,746, and a method of blending the polyamide resin and a polymer obtained by graft-polymerizing acrylonitrile and styrene onto acrylic rubber is disclosed in GB 1,506,430. In these resin compositions, however, either one of the heat stability or impact resistance at low temperatures of the polyamide resin is inferior although the impact resistance at room temperature thereof has been improved.

SUMMARY OF THE INVENTION

The present inventors have made an extensive study about a method for improving the impact resistance and heat stability at low temperatures of the polyamide resin as well as those at high temperatures thereof, and as a result, have found that the expected object can be attained by blending the polyamide resin with a particular graft copolymer and if necessary a reinforcing filler in particular proportions. The present inventors thus completed the present invention.

The present invention relates to a thermoplastic resin composition excellent in impact resistance and heat stability comprising a blend obtained by blending the following components (A) (B) and (C):

(A) 10 to 90 parts by weight of a polyamide,
(B) 90 to 10 parts by weight of a compound rubber graft copolymer obtained by graft-polymerizing 5 to 13 wt.%, based on the compound rubber graft copolymer, of at least one vinyl monomer (B-2) selected from the group consisting of vinyl cyanide monomers, aromatic vinyl monomers and (meth)acrylate monomers onto 87 to 95 wt.%, based on the compound rubber graft copolymer, of a compound rubber (B-1), the total amount of (B-1) and (B-2) being 100 wt.% based on the compound rubber graft copolymer, the compound rubber (B-1) consisting of 10 to 90 wt.% of a polyorganosiloxane rubber component (b-1) and 90 to 10 wt.% of a polyalkyl (meth)acrylate rubber component (b-2), the total amount of (b-1) and (b-2) being 100 wt.% based on the compound rubber (B-1), and the compound rubber (B-1) having such a structure that the both rubber components are not separable from each other, and
(C) 0 to 80 parts by weight of a polymer obtained by polymerizing at least one member selected from the group consisting of vinyl cyanide monomers, aromatic vinyl monomers and (meth)acrylate monomers, so that the total amount of the components (A), (B) and (C) is 100 parts by weight, and
(D) 0 to 100 parts by weight of a reinforcing filler.

PREFERRED EMBODIMENTS OF THE INVENTION

The present invention will be illustrated below in detail. First, explanation will be given to every component constituting the thermoplastic resin composition of the present invention.

A. Polyamide

The polyamide constituting the thermoplastic resin composition of the present invention (hereinafter referred to as polyamide (A)) includes those obtained by polymerization of a 3 or more-membered cyclic lactam or a polymerizable ω-amino acid, or polycondensation of a dibasic acid with a diamine.

Specifically, there are mentioned polymers of ε-caprolactam, aminocaproic acid, enantholactam, 7-aminoheptanoic acid, 11-aminoundecanoic acid, 9-aminononanoic acid and the like, polymers obtained by polycondensation of a diamine (e.g. hexamethylenediamine, nonamethylenediamine, un-

2

decamethylenediamine, dodecamethylenediamine, m-xylylenediamine) with a dicarboxylic acid (e.g. terephthalic acid, isophthalic acid, adipic acid, sebacic acid, a dodecanedibasic acid, glutaric acid), and copolymers thereof. For example, there are mentioned nylon 6, nylon 11, nylon 12, nylon 4•6, nylon 6•6, nylon 6•10, nylon 6•12 and the like.

The amount of the polyamide used is 10 to 90 parts by weight, preferably 30 to 80 parts by weight of 100 parts by weight of the total amount of the components (A), (B) and (C). When it is outside this range, resin compositions having properties which meet the expectation of the present invention are not usually obtainable.

B. Compound rubber graft copolymer

The compound rubber graft copolymer used in the present invention (hereinafter also referred to as compound rubber graft copolymer (B)) is one obtained by graft-polymerizing 5 to 13 parts by weight of at least one vinyl monomer (B-2) selected from the group consisting of vinyl cyanide monomers, aromatic vinyl monomers and (meth)acrylate monomers onto 87 to 95 parts by weight of a compound rubber (B-1), the total amount of (B-1) and (B-2) being 100 wt.% based on the compound rubber graft copolymer (B), the compound rubber (B-1) consisting of 10 to 90 wt.% of a polyorganosiloxane rubber component (b-1) and 90 to 10 wt.% of a polyalkyl (meth)acrylate rubber component (b-2), the total amount of (b-1) and (b-2) being 100 wt.% based on the compound rubber (B-1), and the compound rubber (B-1) having such a structure that the both rubber components are not substantially separable from each other.

When either one of the polyorganosiloxane rubber component or polyalkyl (meth)acrylate rubber component or a simple mixture thereof is used as a rubber source in place of the above compound rubber (B-1), resin compositions having characteristics which meet the object of the present invention are not obtained. Resin compositions having excellent impact resistance and heat stability can be obtained only when the compound rubber graft copolymer (B) to be blended into the resin compositions comprises as rubber source a united compound rubber of the polyorganosiloxane rubber component with the polyalkyl (meth)acrylate rubber component and besides the united compound rubber content is as high as 87 to 95 wt.%.

For producing the compound rubber (B-1) used in the present invention, the emulsion polymerization method is most suitable. For carrying out this method, it is preferred that first, the latex of the polyorganosiloxane rubber is prepared, and then a monomer for synthesizing the polyalkyl (meth)acrylate rubber is allowed to soak into the rubber particles of the above polyorganosiloxane rubber latex and polymerized. This method will be explained in detail.

B-1. Preparation of polyorganosiloxane rubber component (b-1)

The polyorganosiloxane rubber component (b-1) constituting the above compound rubber (B-1) can be prepared by emulsion polymerization using organosiloxane and a crosslinking agent (I) described below. In this polymerization, a graft-linking agent (I) may be used together.

The organosiloxane includes various 3 or more-membered cyclic compounds, among which 3 to 6-membered cyclic compounds are preferably used. For example, there are mentioned hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, octaphenylcyclotetrasiloxane, etc. These compounds are used alone or in admixture of two or more of them. The amount of these organosiloxanes used is 50 wt.% or more, preferably 70 wt.% or more of the polyorganosiloxane rubber component.

As the crosslinking agent (I), trifunctional or tetrafunctional silane crosslinking agents such as trimethoxymethylsilane, triethoxyphenylsilane, tetramethoxysilane, tetraethoxysilane, tetra-n-propoxysilane, tetrabutoxysilane and the like are used. Particularly preferred crosslinking agents are the tetrafunctional ones, among which tetraethoxysilane is particularly preferred. The amount of the crosslinking agent used is 0.1 to 30 wt.% of the polyorganosiloxane rubber component.

The graft-linking agent (I) includes those which can form a unit represented by the formula (I-1), (I-2) or (I-3),

$$CH_2=\underset{\underset{R^2}{|}}{C}-COO-(CH_2)_p-SiR^1_nO_{(3-n)/2} \qquad (I-1)$$

$$CH_2=CH-SiR^1_nO_{(3-n)/2} \qquad (I-2)$$

or

$$HS-(CH_2)_p-SiR^1_nO_{(3-n)/2} \qquad (I-3)$$

wherein $R^1$ represents a methyl, ethyl, propyl or phenyl group, $R^2$ represents a hydrogen atom or a methyl group, n represents an integer of 0, 1 or 2, and p represents an integer of 1 to 6. (Meth)acryloyloxysiloxane which can form the unit of the formula (I-1), because of its high grafting efficiency, can form effective graft chains, so that it is advantageous in terms of development of impact resistance.

As a compound which can form the unit of the formula (I-1), methacryloyloxysiloxane is particularly preferred. Specific examples of the methacryloyloxysiloxane include $\beta$-methacryloyloxyethyldimethoxymethylsilane, $\gamma$-methacryloyloxypropylmethoxydimethylsilane, $\gamma$-methacryloyloxypropyldimethoxymethylsilane, $\gamma$-methacryloyloxypropyltrimethoxysilane, $\gamma$-methacryloyloxypropylethoxydiethylsilane, $\gamma$-methacryloyloxypropyldiethoxymethylsilane, $\delta$-methacryloyloxybutyldiethoxymethylsilane and the like. The amount of the graft-linking agent used is 0 to 10 wt.% of the polyorganosiloxane rubber component.

For producing the latex of this polyorganosiloxane rubber component, methods described, for example, in USP No. 2891920, No. 3294725, etc. can be used. In practicing the present invention, it is preferred to produce the latex, for example, by the method in which a mixed solution of organosiloxane, the crosslinking agent (I) and if necessary the graft-linking agent (I) is shear-mixed with water with, for example, a homogenizer in the presence of a sulfonic acid emulsifier such as an alkylbenzenesulfonic acid, an alkylsulfonic acid, etc. The alkylbenzenesulfonic acid is suitable because it acts as an emulsifier for organosiloxane and at the same time works as a polymerication initiator. In this case, it is preferred to use the metal salt of an alkylbenzenesulfonic acid or an alkylsulfonic acid together with the above sulfonic acid since the metal salt has an effect to keep the polymer stable during the graft polymerization.

B-2. Preparation of polyalkyl (meth)acrylate rubber component (b-2)

The polyalkyl (meth)acrylate rubber component constituting the above compound rubber can be synthesized using an alkyl (meth)acrylate, a crosslinking agent (II) and a graft-linking agent (II) described below. Synthesis of the component (b-2) is preferably carried out at the time of preparation of the compound rubber (B-1) as described in B-3 below.

The alkyl (meth)acrylate includes for example alkyl acrylates (e.g. methyl acrylate, ethyl acrylate, n-propyl acrylate, n-butyl acrylate, 2-ethylhexyl acrylate) and alkyl methacrylates (e.g. hexyl methacrylate, 2-ethylhexyl methacrylate, n-lauryl methacrylate). Among these, n-butyl acrylate is particularly preferred.

The crosslinking agent (II) includes for example ethylene glycol dimethacrylate, propylene glycol dimethacrylate, 1,3-butylene glycol dimethacrylate, 1,4-butylene glycol dimethacrylate, etc.

The graft-linking agent (II) includes for example allyl methacrylate, triallyl cyanulate, triallyl isocyanulate, etc. Allyl methacrylate can also be used as the crosslinking agent.

These crosslinking agents and graft-linking agents are used alone or in admixture of two or more of them. The total amount of these crosslinking agent and graft-linking agent used is 0.1 to 20 wt.% of the polyalkyl (meth)acrylate rubber component.

B-3. Preparation of compound rubber (B-1)

Next, the compound rubber (B-1) will be explained. For producing the compound rubber, it is preferred to firstly allow the monomer for synthesizing the polyalkyl (meth)acrylate rubber to soak into the rubber

4

particles of the polyorganosiloxane rubber latex and then polymerize the above monomer. Referring more particularly to this method, the above alkyl (meth)acrylate, crosslinking agent (II) and graft-linking agent (II) are added to the latex of the polyorganosiloxane rubber component previously neutralized by adding the aqueous solution of an alkali (e.g. sodium hydroxide, potassium hydroxide, sodium carbonate) to allow them to soak into the polyorganosiloxane rubber particles, and then alkyl (meth)acrylate is polymerized by the action of a common radical polymerization initiator. With the progress of the polymerization, the formed polyalkyl (meth)acrylate rubber is compounded and united with the polyorganosiloxane rubber. As a result, the latex of the compound rubber in which the polyorganosiloxane rubber component and polyalkyl (meth)-acrylate rubber component have been united substantially inseparably, is obtained.

In practicing the present invention, a preferably used compound rubber is one in which the main skeleton of the polyorganosiloxane rubber component has a repeating unit of dimethylsiloxane and that of the polyalkyl (meth)acrylate rubber component has a repeating unit of n-butyl acrylate.

The compound rubber thus prepared by emulsion polymerization is graft-copolymerizable with the vinyl monomer (B-2). And also, since its components, the polyorganosiloxane rubber and polyalkyl (meth)acrylate rubber, have been compounded and united together inseparably, they cannot be separated from each other by extraction with usual organic solvents (e.g. acetone, toluene).

In the compound rubber used in the present invention, when the amount of the polyorganosiloxane rubber component exceeds 90 wt.%, the resin composition obtained gives only molded products having a poor surface appearance. When the amount of the polyalkyl (meth)acrylate rubber component exceeds 90 wt.%, the resin composition obtained gives only molded products of which the low-temperature impact resistance tends to become particularly poor. Such the amounts of the components are not therefore desirable. Because of this, the amounts of both rubber components constituting the compound rubber need to be in a range of 10 to 90 wt.%, particularly preferably 20 to 80 wt.%, provided that the total amount of the both is 100 wt.%.

It is preferred for the above compound rubber to have an average particle size ranging from 0.08 to 0.6 $\mu$m. When the average particle size is less than 0.08 $\mu$m, the resin composition obtained gives only molded products having a poor impact resistance. When it exceeds 0.6 $\mu$m, the resin composition obtained gives only molded products which are poor in both the impact resistance and surface appearance. The gel content of this compound rubber measured by extracting the gel with toluene at 90°C for 12 hours is 80 wt.% or more.

The above compound rubbers can be used alone or in admixture of two or more of them. B-4. Preparation of compound rubber graft copolymer (B)

For graft-polymerizing the vinyl monomer (B-2) onto the above compound rubber (B-1), at least one member selected from the group consisting of vinyl cyanide monomers, aromatic vinyl monomers and (meth)acrylate monomers is used.

The vinyl cyanide monomer includes acrylonitrile, methacrylonitrile, ethacrylonitrile, fumaronitrile, etc. These can be used alone or in combination.

The aromatic vinyl monomer includes styrene, $\alpha$-methylstyrene, o-methylstyrene, 1,3-dimethylstyrene, p-methylstyrene, tert-butylstyrene, halogenated styrene, p-ethylstyrene, etc. These can be used alone or in combination.

The (meth)acrylate monomer includes methyl methacrylate, ethyl methacrylate, propyl methacrylate, etc. These can be used alone or in combination.

A part of these monomers can be replaced by other copolymerizable vinyl monomers. These copolymerizable vinyl monomers include 2-vinylpyridine, 4-vinylpyridine and maleimide monomers (e.g. N-phenylmaleimide), but are not limited thereto. These copolymerizable vinyl monomers are used in a range up to 35 wt.% of the monomer to be graft-polymerized, as need arises.

The amount of the vinyl monomer (B-2) to be polymerized in the presence of the compound rubber (B-1) is 5 to 13 wt.% based on the compound rubber graft copolymer (B). The amount of the compound rubber (B-1) is 87 to 95 wt.% based on the compound rubber graft copolymer (B). The total amount of the both is 100 wt.%. The amount of the compound rubber (B-1) in the compound rubber graft copolymer (B) is important because it exerts a great effect on the resin obtained. It is therefore needs to be in a range of from 87 wt.% to 95 wt.%. When it is less than 87 wt.%, the impact resistance is insufficient, and when it exceeds 95 wt.%, rubber aggregation is so remarkable that problems occur in processability.

As to the particle size of this compound rubber graft copolymer (B), it is desirable that particularly the average particle size is 0.1 to 0.7 $\mu$m.

The amount of the compound rubber graft copolymer (B) used is 10 to 90 parts by weight, preferably 10 to 30 parts by weight of 100 parts by weight of the total amount of the components (A), (B) and (C). When it is less than 10 parts by weight, the resin composition obtained is inferior in impact resistance, and

EP 0 468 462 A2

when it exceeds 90 parts by weight, the chemical resistance is inferior. Such the amounts outside the above range are not therefore preferred.

The compound rubber graft copolymers (B) are used alone or in admixture of two or more of them.

C. Polymer

The polymer of the present invention (hereinafter referred also to as polymer (C)) is one obtained by polymerizing at least one member selected from the group consisting of vinyl cyanide monomers, aromatic vinyl monomers and (meth)acrylate monomers. These monomers used herein are the same as the vinyl monomers (B-2) used in preparation of the above compound rubber graft copolymer (B).

In producing the polymer (C), a part of these monomers may be replaced by other copolymerizable monomers. Such other copolymerizable monomers include maleimide monomers, pyridine monomers and the like but are not particularly limited thereto.

The polymer (C) is used as need arises with the object of improving the moldability, heat resistance and modulus of elasticity.

The amount of the polymer (C) used is 0 to 80 parts by weight, preferably 0 to 60 parts by weight of 100 parts by weight of the total amount of the components (A), (B) and (C). When it is outside of the above range, the desired resin composition of the present invention is not obtained, which is not preferred. As to the polymer (C), those having an intrinsic viscosity of 0.3 to 1.5 are preferably used in terms of moldability and impact resistance.

D. Reinforcing filler

In the present invention, the heat resistance, stiffness and heat-dimensional stability can be improved by blending a reinforcing filler (D) as need arises. These is no particular limitation to the reinforcing filler (D), but there are mentioned for example one or more members selected from the group consisting of inorganic fibers (e.g. glass fibers, carbon fibers) and inorganic fillers (e.g. wollastonite, talc, mica powders, glass foil, potassium titanate).

The amount of the reinforcing filler (D) blended is 0 to 100 parts by weight based on 100 parts by weight of the total amount of the components (A), (B) and (C). When it exceeds 100 parts by weight, the resin composition obtained is inferior in the impact resistance so that it is not the composition which meets the object of the present invention.

Further, to the thermoplastic resin composition of the present invention may properly be added various additives such as modifiers, mold-release agents, light or heat stabilizers, dyes, pigments and the like as need arises.

Preparation of the thermoplastic resin composition of the present invention can be carried out with apparatus used for blending common resins such as a Henschel mixer, tumbler, etc. Shaping also can be carried out with apparatus used for usual shaping such as single screw extruders, twin-screw extruders, injection molding machines, etc.

The present invention will be illustrated in more detail with reference to the following examples. In the following examples and comparative examples, all "parts" and "percents (%)" mean "part by weight" and "wt.%", respectively.

The physical properties in the examples and comparative examples were evaluated by the following methods.

(1) Izod impact strength Measured according to ASTM D-256 using a notched test piece of 1/4 inch in thickness (unit, kg·cm/cm).

(2) Heat distortion temperature Measured according to ASTM D-648 (flexural stress, 4.6 kg/cm$^2$; unit, °C).

(3) Heat stability The test piece was placed for 72 hours in an oven kept at 120°C and then measured for $\Delta E$ according to ASTM D-1925 by means of a Model CSM-4-2 Color computer (produced by Suga Test Instruments Co., Ltd.).

(4) Flexural modulus Measured according to ASTM D-790 (unit, kg·cm/cm). The test piece was conditioned at 23°C and 50 RH for one week and measured for flexural modulus under the conditions : Thickness, 1/8 inch; distance between fulcra, 5 cm; bending rate, 1.3 mm/sec.

The components used in the examples and comparative examples are as follows.

6

A. Polyamide (A)

Nylon 6 produced by Mitsubishi Kasei Corp. "NOVAMID® 1010", was used as the polyamide.

B. Graft copolymer (B)

⟨Production of graft copolymer [B(i)]⟩

The graft copolymer [B(i)] is a compound rubber graft copolymer according to the present invention, and it was produced as follows.

Two parts of tetraethoxysilane, 0.5 part of γ-methacryloyloxypropyldimethoxymethylsilane and 97.5 parts of octamethylcyclotetrasiloxane were mixed to obtain 100 parts of a siloxane mixture. One part of sodium dodecylbenzenesulfonate and 1 part of dodecylbenzenesulfonic acid were dissolved in 200 parts of distilled water, and to the resulting solution was added 100 parts of the above siloxane mixture. The resulting mixture was preliminarily stirred at 10,000 rpm with a homomixer and then emulsified and dispersed with a homogenizer under a pressure of 300 kg/cm² to obtain an organosiloxane latex. This latex was transferred to a separable flask equipped with a condenser and a stirring blade, heated at 80°C for 5 hours with stirring and mixing and then allowed to stand at 20°C. After 48 hours, this latex was neutralized to a pH of 6.9 with an aqueous sodium hydroxide solution to complete polymerization. Thus, a polyorganosiloxane rubber latex was obtained. The conversion of the siloxane mixture to the polyorganosiloxane rubber was 89.7%, and the average particle size of the polyorganosiloxane rubber was 0.16 μm.

One hundred parts of this polyorganosiloxane rubber latex (solid content, 30%) was sampled and put in a separable flask equipped with a stirrer. After 120 parts of distilled water was added and the atmosphere of the flask was replaced by a nitrogen gas, the contents of the flask were heated to 50°C. At this temperature, a mixture of 56.25 parts of n-butyl acrylate, 3.75 parts of allyl methacrylate and 0.45 part of tert-butyl hydroperoxide was added, after which stirring was continued for 30 minutes to allow the mixture to soak into the polyorganosiloxane rubber particles. Thereafter, a mixture of 0.0003 part of ferrous sulfate, 0.001 part of disodium ethylenediaminetetraacetate, 0.17 part of Rongalite (Sodium formaldehyde sulfoxylate) and 3 parts of distilled water was added to start radical polymerization. The reaction mixture was kept at an inner temperature of 70°C for 2 hours to complete the polymerization. Thus, a compound rubber latex was obtained. A part of this latex was sampled, and the average particle size of the compound rubber was measured to find that it was 0.23 μm. Separately, this latex was dried, the solid matter obtained was subjected to extraction with toluene at 90°C for 12 hours, and the gel content was measured to find that it was 88.5%.

A mixture of 0.3 part of tert-butyl hydroperoxide, 3 parts of acrylonitrile and 7 parts of styrene was dropwise added to 90 parts (as solid matter) of this compound rubber latex at 70°C over 45 minutes. Thereafter, the reaction mixture was kept at 70°C for 4 hours to complete graft polymerization onto the compound rubber.

The conversion of the monomer mixture for graft polymerization was 99.2%. The resulting graft copolymer latex was coagulated by adding it dropwise to hot water containing 5% of calcium chloride. The coagulated product was separated, washed and dried at 75°C for 16 hours to obtain a compound rubber graft copolymer [B(i)].

⟨Production of graft copolymer [B(ii)]⟩

Sixty parts of the same polyorganosiloxane rubber latex (solid content, 30%) as used in the production of the graft copolymer [B(i)] was sampled and put in a separable flask equipped with a stirrer. After 120 parts of distilled water was added and the atmosphere of the flask was replaced by a nitrogen gas, the contents of the flask were heated to 50°C. At this temperature, a mixture of 69 parts of n-butyl acrylate, 4 parts of allyl methacrylate and 0.6 part of tert-butyl hydroperoxide was added, after which stirring was continued for 30 minutes to allow the mixture to soak into the polyorganosiloxane rubber particles. Thereafter, a mixture of 0.0006 part of ferrous sulfate, 0.002 part of disodium ethylenediaminetetraacetate, 0.34 part of Rongalite and 6 parts of distilled water was added to start radical polymerization. The reaction mixture was kept at an inner temperature of 70°C for 2 hours to complete the polymerization. Thus, a compound rubber latex was obtained. A part of this latex was sampled, and the average particle size of the compound rubber was measured to find that it was 0.22 μm. Separately, this latex was dried, the solid matter obtained was subjected to extraction with toluene at 90°C for 12 hours, and the gel content was measured to find that it was 87.0%.

7

A mixture of 0.2 part of tert-butyl hydroperoxide and 9 parts of methyl methacrylate was dropwise added to 91 parts (as solid matter) of this compound rubber latex at 70°C over 45 minutes. Thereafter, the reaction mixture was kept at 70°C for 4 hours to complete graft polymerization onto the compound rubber.

The conversion of the monomer mixture for graft polymerization was 99.4%. The resulting graft copolymer latex was coagulated, separated, washed and dried in the same manner as for the compound rubber graft copolymer [B(i)] to obtain a compound rubber graft copolymer [B(ii)].

⟨Production of graft copolymer [B(iii)]⟩

One hundred parts of the same polyorganosiloxane rubber latex (solid content, 30%) as used in the production of the graft copolymer [B(i)] was sampled and put in a separable flask equipped with a stirrer. After 120 parts of distilled water was added and the atmosphere of the flask was replaced by a nitrogen gas, the contents of the flask were heated to 50°C. At this temperature, a mixture of 37.5 parts of n-butyl acrylate, 2.5 parts of allyl methacrylate and 0.3 part of tert-butyl hydroperoxide was added, after which stirring was continued for 30 minutes to allow the mixture to soak into the polyorganosiloxane rubber particles. Thereafter, a mixture of 0.0003 part of ferrous sulfate, 0.001 part of disodium ethylenediaminetetraacetate, 0.17 part of Rongalite and 3 parts of distilled water was added to start radical polymerization. The reaction mixture was kept at an inner temperature of 70°C for 2 hours to complete the polymerization. Thus, a compound rubber latex was obtained. A part of this latex was sampled, and the average particle size of the compound rubber was measured to find that it was 0.19 μm. Separately, this latex was dried, the solid matter obtained was subjected to extraction with toluene at 90°C for 12 hours, and the gel content was measured to find that it was 90.3%.

A mixture of 0.3 part of tert-butyl hydroperoxide, 9 parts of acrylonitrile and 21 parts of styrene was dropwise added to 70 parts (as solid matter) of this compound rubber latex at 70°C over 45 minutes. Thereafter, the reaction mixture was kept at 70°C for 4 hours to complete graft polymerization onto the compound rubber.

The conversion of the monomer mixture for graft polymerization was 98.6%. The resulting graft copolymer latex was coagulated by adding it dropwise to hot water containing 5% of calcium chloride. The coagulated product was separated, washed and dried at 75°C for 16 hours to obtain a compound rubber graft copolymer [B(iii)].

⟨Production of graft copolymer [B(iv)]⟩

This graft copolymer [B(iv)] is a graft copolymer of a rubber comprising polyorganosiloxane alone, and it was produced as follows.

Three parts of tetraethoxysilane, 1 part of γ-methacryloyloxypropyldimethoxymethylsilane and 96 parts of octamethylcyclotetrasiloxane were mixed to obtain 100 parts of a siloxane mixture. One part of dodecylbenzenesulfonic acid was dissolved in 300 parts of distilled water, and to the resulting solution was added 100 parts of the above siloxane mixture. The resulting mixture was preliminarily stirred at 10,000 rpm with a homomixer and emulsified and dispersed by passing it twice through a homogenizer under a pressure of 300 kg/cm$^2$ to obtain an organosiloxane latex. This latex was transferred to a separable flask equipped with a condenser and a stirring blade, heated at 85°C for 4 hours with stirring and mixing and then cooled at 5°C for 24 hours. Thereafter, this latex was neutralized to a pH of 7.2 with an aqueous sodium hydroxide solution to complete polymerization. The conversion of the siloxane mixture to the polyorganosiloxane rubber was 91.2%. The solid content was 22.74%, the degree of swelling (proportion of the weight of toluene absorbed into the polyorganosiloxane rubber when the rubber is saturated with a toluene solvent at 25°C) was 7.4, and the particle size of the polyorganosiloxane rubber was 0.150 μm.

263.9 Parts of this polyorganosiloxane rubber latex (solid content, 22.74%) was put in a separable flask, and the atmosphere of the flask was replaced by a nitrogen gas. After the contents of the flask were heated to 70°C, a monomer mixture consisting of 10 parts of acrylonitrile, 30 parts of styrene and 0.08 part of tert-butyl hydroperoxide was added, and stirring was continued for 30 minutes. Thereafter, an aqueous solution consisting of 0.12 part of Rongalite, 0.0002 part of ferrous sulfate, 0.0006 part of disodium ethylenediaminetetraacetate and 10 parts of water was further added to start radical polymerization. After generation of polymerization heat ceased, the reaction temperature was maintained for 2 hours to complete the graft polymerization. The conversion of the monomer mixture for graft polymerization was 97%, the grafting ratio was 48% and the grafting efficiency was 72%. The latex obtained was dropwise added to hot water containing 5 parts of dissolved calcium chloride dihydrate to coagulate the graft copolymer. The coagulated graft copolymer was separated and dried to remove moisture. Thus, the graft copolymer [B(iv)] was obtained.

⟨Production of graft copolymer [B(v)]⟩

The graft copolymer [B(v)] is a graft copolymer of an aggregated polybutadiene latex, and it was produced as follows.

To 60 parts (as solid matter) of a polybutadiene latex having a solid content of 33% and an average particle size of 0.08 $\mu$m was added 1 part (as solid matter) of a copolymer latex having an average particle size of 0.08 $\mu$m and consisting of 85% of a n-butyl acrylate unit and 15% of a methacrylic acid unit with stirring. The resulting mixture was stirred for 30 minutes to obtain an aggregated rubber latex of 0.28 $\mu$m in average particle size.

Sixty parts (as solid matter) of this aggregated rubber latex was added to a reactor, and 50 parts of distilled water, 2 parts of a wood rosin emulsifier, 0.2 parts of Demol N (trade name of a naphthalenesulfonic acid/formalin condensate produced by Kao Corp.), 0.02 part of sodium hydroxide, 0.35 part of dextrose, 5 parts of butyl acrylate and 0.1 part of cumene hydroperoxide were added thereto with stirring. The resulting mixture was heated, and at a point when the inner temperature reached 60°C, 0.05 part of ferrous sulfate, 0.2 part of sodium pyrophosphate and 0.03 part of sodium dithionite were added. The inner temperature was then kept at 60°C for 1 hour. Thereafter, a mixture consisting of 10 parts of acrylonitrile, 25 parts of styrene, 0.2 part of cumene hydroperoxide and 0.5 part of tert-dodecylmercaptan was continuously added dropwise thereto over 90 minutes. The reaction mixture was kept at the same temperature for further 1 hour and then cooled. The graft copolymer latex obtained was coagulated with a dilute sulfuric acid, washed, filtered off and dried to obtain the graft copolymer [B(v)].

⟨Production of graft copolymer [B(vi)]⟩

The graft copolymer [B(vi)] is a graft copolymer of a polyalkyl (meth)acrylate rubber, and it was produced as follows.

A solution consisting of

| | |
|---|---|
| potassium oleate | 1 part |
| disproportionated potassium rhodinate | 1 part |
| sodium pyrophosphate | 0.5 part |
| ferrous sulfate | 0.005 part |
| dextrose | 0.3 part |
| anhydrous sodium sulfate | 0.3 part |
| ion-exchanged water | 190 parts |

was heated to 70°C in a nitrogen gas atmosphere, and a solution of 0.12 part of potassium peroxide (KPS) in 10 parts of ion-exchanged water was added thereto. Thereafter, the following monomer mixture which was in a nitrogen gas atmosphere was continuously added dropwise to the above mixed solution over 2 hours:

| | |
|---|---|
| n-butyl acrylate | 60 parts |
| allyl methacrylate | 0.32 part |
| ethylene glycol dimethacrylate | 0.16 part |

After completion of the addition, the reaction mixture was further heated to 80°C and kept at this temperature for 1 hour. The conversion reached 98.8%. The degree of swelling of this acrylic rubber was 6.4, the degree of swelling being the weight ratio of the swollen rubber after statically dipped in methyl ethyl ketone at 30°C for 24 hours to the absolutely dry rubber. The gel content and particle size of this acrylic rubber were 93.0% and 0.22 $\mu$m, respectively.

To 60 parts (as solid matter) of this acrylic rubber was continuously added dropwise a mixture of a monomer for graft polymerization consisting of 12 parts of acrylonitrile and 28 parts of styrene, and 0.35 part of benzoyl peroxide over 1 hour. After completion of the addition, the reaction mixture was heated to 80°C and kept at this temperature for 30 minutes. The conversion of the monomer mixture for graft polymerization was 99%. A part of the latex was coagulated with a dilute sulfuric acid, and the coagulated product was separated and dried to obtain a powder. This powder was subjected to extraction under reflux of methyl ethyl ketone, and the reduced viscosity ($\eta$sp/c) of the extract was measured at 25°C with dimethylformamide as a solvent to find that it was 0.67.

The latex thus produced was coagulated by adding it to a 0.15% aqueous aluminum chloride (AlCl$_3$•6H$_2$O) solution (90°C) of three times its total weight with stirring. After cooling, the liquid portion was removed with a centrifugal dehydrator, and the solid portion, the coagulated product, was washed and dried to obtain the graft copolymer [B(vi)].

⟨Production of graft copolymer [B(vii)]⟩

Sixty parts of the same polyorganosiloxane latex (solid content, 30%) as used in the production of the graft copolymer [B(i)] was sampled and put in a separable flask equipped with a stirrer. After 120 parts of distilled water was added and the atmosphere of the flask was replaced by a nitrogen gas, the contents of the flask were heated to 50°C. At this temperature, a mixture of 66 parts of n-butyl acrylate, 4 parts of allyl methacrylate and 0.6 part of tert-butyl hydroperoxide was added, after which stirring was continued for 30 minutes to allow the mixture to soak into the polyorganosiloxane rubber particles. Thereafter, a mixture of 0.0006 part of ferrous sulfate, 0.002 part of disodium ethylenediaminetetraacetate, 0.34 part of Rongalite and 3 parts of distilled water was added to start radical polymerization. The reaction mixture was kept at an inner temperature of 70°C for 2 hours to complete the polymerization. Thus, a compound rubber latex was obtained. A part of this latex was sampled, and the average particle size of the composite rubber was measured to find that it was 0.21 μm. Separately, this latex was dried, the solid matter obtained was subjected to extraction with toluene at 90°C for 12 hours, and the gel content was measured to find that it was 91.0%.

A mixture of 0.2 part of tert-butyl hydroperoxide, 3 parts of styrene and 9 parts of methyl methacrylate was dropwise added to 88 parts (as solid matter) of this compound rubber latex at 70°C over 45 minutes. Thereafter, the reaction mixture was kept at 70°C for 4 hours to complete graft polymerization onto the compound rubber.

The conversion of the monomer mixture for graft polymerization was 99.0%. The resulting graft copolymer latex was coagulated by adding it dropwise to hot water containing 5% of calcium chloride. The coagulated product was separated, washed and dried at 75°C for 16 hours to obtain a compound rubber graft copolymer [B(vii)].

⟨Production of graft copolymer [B(viii)]⟩

Seventy parts of the same polyorganosiloxane latex (solid content, 30%) as used in the production of the graft copolymer [B(i)] was sampled and put in a separable flask equipped with a stirrer. After 120 parts of distilled water was added and the atmosphere of the flask was replaced by a nitrogen gas, the contents of the flask were heated to 50°C. At this temperature, a mixture of 66 parts of n-butyl acrylate, 3 parts of allyl methacrylate and 0.6 part of tert-butyl hydroperoxide was added, after which stirring was continued for 30 minutes to allow the mixture to soak into the polyorganosiloxane rubber particles. Thereafter, a mixture of 0.0006 part of ferrous sulfate, 0.002 part of dissodium ethylenediaminetetraacetate, 0.34 part of Rongalite and 3 parts of distilled water was added to start radical polymerization. The reaction mixture was kept at an inner temperature of 70°C for 2 hours to complete the polymerization. Thus, a compound rubber latex was obtained. A part of this latex was sampled, and the average particle size of the compound rubber was measured to find that it was 0.23 μm. Separately, this latex was dried, the solid matter obtained was subjected to extraction with toluene at 90°C for 12 hours, and the gel content was measured to find that it was 90.6%.

A mixture of 0.2 part of tert-butyl hydroperoxide and 10 parts of styrene was dropwise added to 90 parts (as solid matter) of this compound rubber latex at 70°C over 45 minutes. Thereafter, the reaction mixture was kept at 70°C for 4 hours to complete graft polymerization onto the compound rubber. The conversion of the monomer mixture for graft polymerization was 99.0%. The resulting graft copolymer latex was coagulated by adding it dropwise to hot water containing 5% of calcium chloride. The coagulated product was separated, washed and dried at 75°C for 16 hours to obtain a compound rubber graft copolymer [B(viii)].

⟨Production of graft copolymer [B(ix)]⟩

Eighty nine parts of the same polyorganosiloxane rubber latex (solid content, 30%) as used in the production of the graft copolymer [B(i)] was sampled and put in a separable flask equipped with a stirrer. After 120 parts of distilled water was added and the atmosphere of the flask was replaced by a nitrogen gas, the contents of the flask were heated to 50°C. At this temperature, a mixture of 49.55 parts of n-butyl acrylate, 3.75 parts of allyl methacrylate and 0.45 part of tert-butyl hydroperoxide was added, after which stirring was continued for 30 minutes to allow the mixture to soak into the polyorganosiloxane rubber particles. Thereafter, a mixture of 0.0003 part of ferrous sulfate, 0.001 part of disodium ethylenediaminetertraacetate, 0.17 part of Rongalite and 3 parts of distilled water was added to start radical polymerization. The reaction mixture was kept at an inner temperature of 70°C for 2 hours to complete the polymerization. Thus, a compound rubber latex was obtained. A part of this latex was sampled, and the average particle size of the compound rubber was measured to find that it was 0.23 $\mu$m. Separately, this latex was dried, the solid matter obtained was subjected to extraction with toluene at 90°C for 12 hours, and the gel content was measured to find that it was 88.5%.

A mixture of 0.6 part of tert-butyl hydroperoxide, 6 parts of acrylonitrile and 14 parts of styrene was dropwise added to 80 parts (as solid matter) of this compound rubber latex at 70°C over 45 minutes. Thereafter, the reaction mixture was kept at 70°C for 4 hours to complete graft polymerization onto the compound rubber.

The conversion of the monomer mixture for graft polymerization was 99%. The resulting graft copolymer latex was coagulated by adding it dropwise to hot water containing 5% of calcium chloride. The coagulated product was separated, washed and dried at 75°C for 16 hours to obtain a compound rubber graft copolymer [B(ix)].

⟨Production of graft copolymer [B(x)]⟩

52.7 Parts of the same polyorganosiloxane rubber latex (solid content, 30%) as used in the production of the graft copolymer [B(i)] was sampled and put in a separable flask equipped with a stirrer. After 120 parts of distilled water was added and the atmosphere of the flask was repalced by a nitrogen gas, the contents of the flask were heated to 50°C. At this temperature, a mixture of 60.19 parts of n-butyl acrylate, 4 parts of allyl methacrylate and 0.6 part of tert-butyl hydroperoxide was added, after which stirring was continued for 30 minutes to allow the mixture to soak into the polyorganosiloxane rubber particles. Thereafter, a mixture of 0.0006 part of ferrous sulfate, 0.002 part of disodium ethylenediaminetertraacetate, 0.34 part of Rongalite and 6 parts of distilled water was added to start radical polymerization. The reaction mixture was kept at an inner temperature of 70°C for 2 hours to complete the polymerization. Thus, a compound rubber latex was obtained. A part of this latex was sampled, and the average particle size of the compound rubber was measured to find that it was 0.21 $\mu$m. Separately, this latex was dried, the solid matter obtained was subjected to extraction with toluene at 90°C for 12 hours, and the gel content was measured to find that it was 87%.

A mixture of 0.2 part of tert-butyl hydroperoxide and 20 parts of methyl methacrylate was dropwise added to 80 parts (as solid matter) of this compound rubber latex at 70°C over 45 minutes. Thereafter, the reaction mixture was kept at 70°C for 4 hours to complete graft polymerization onto the compound rubber.

The conversion of the monomer mixture for graft polymerization was 99.3%. The resulting graft copolymer latex was coagulated by adding it dropwise to hot water containing 5% of calcium chloride. The coagulated product was separated, washed and dried at 75°C for 16 hours to obtain a compound rubber graft copolymer (B(x)). C. Polymer

⟨Production of polymers [C(i)] and [C(ii)]⟩

The polymers [C(i)] and [C(ii)] having compositions shown in Table 1 were obtained by the suspension polymerization method.

The reduced viscosity ($\eta$sp/c) at 25°C of these polymers are shown together in Table 1. In Table 1, $\eta$sp/c of the polymer [C(i)] is a value measured with a 0.2% dimethylformamide solution, and that of the polymer [C(ii)] is a value measured with a 1% chloroform solution.

## Table 1

| | Composition | | $\eta sp/c$ |
|---|---|---|---|
| Polymer [C(i)] | Acrylonitrile | 29% | 0.62 |
| | Styrene | 71% | |
| Polymer [C(ii)] | Methyl methacrylate | 30% | 0.07 |
| | Acrylonitrile | 25% | |
| | Styrene | 45% | |

D. Reinforcing filler

ECSO3T-34 (produced by Nippon Electric Glass Co., Ltd.) was used as glass fiber, PYROFIL® TR-06N (produced by Mitsubishi Rayon Co., Ltd.) was used as carbon fiber, and MICROTALC 10-52 (produced by Pfizer MSP Co., Ltd.) was used as talc.

Examples 1 to 8 and Comparative Examples 1 to 12

Components such as the polymers obtained above, glass fiber, carbon fiber and talc were blended in proportions shown in Table 2. Every mixture was mixed for 5 minutes on a Henschel mixer and pelletized on a twin-screw extruder having a screw of 30 mm in diameter. Using these pellets, the physical properties were evaluated by the methods described above. The results are shown together in Table 2.

Table 2

| | | | Example 1 | Example 2 | Example 3 | Example 4 | Example 5 | Example 6 |
|---|---|---|---|---|---|---|---|---|
| Composition | Polyamide (A) | | 80 | 85 | 70 | 30 | 80 | 80 |
| | Graft copolymer | B(i) | 20 | | 20 | | 20 | 20 |
| | " | B(ii) | | 15 | | 20 | | |
| | " | B(iii) | | | | | | |
| | " | B(iv) | | | | | | |
| | " | B(v) | | | | | | |
| | " | B(vi) | | | | | | |
| | " | B(vii) | | | | | | |
| | " | B(viii) | | | | | | |
| | " | B(ix) | | | | | | |
| | " | B(x) | | | | | | |
| | Copolymer | C(i) | | | 10 | | | |
| | " | C(ii) | | | | 50 | | |
| | Glass fiber | D(i) | | | | | 15 | |

- to be continued -

EP 0 468 462 A2

Table 2 (cont'd.)

| | | | Example 7 | Example 8 | Comparative Example 1 | Comparative Example 2 | Comparative Example 3 |
|---|---|---|---|---|---|---|---|
| Composition | Polyamide (A) | | 80 | 80 | 80 | 85 | 80 |
| | Graft copolymer | B(i) | | | | | |
| | " | B(ii) | | | | | |
| | " | B(iii) | | | 20 | 15 | |
| | " | B(iv) | | | | | 20 |
| | " | B(v) | | | | | |
| | " | B(vi) | | | | | |
| | " | B(vii) | 20 | | | | |
| | " | B(viii) | | 20 | | | |
| | " | B(ix) | | | | | |
| | " | B(x) | | | | | |
| | Copolymer | C(i) | | | | | |
| | " | C(ii) | | | | | |
| | Glass fiber | D(i) | | | | | |

- to be continued -

EP 0 468 462 A2

Table 2 (cont'd.)

| | | | Comparative Example 4 | Comparative Example 5 | Comparative Example 6 | Comparative Example 7 | Comparative Exmaple 8 |
|---|---|---|---|---|---|---|---|
| Composition | Polyamide (A) | | 80 | 80 | 70 | 30 | 80 |
| | Graft copolymer | B(i) | | | | | |
| | " | B(ii) | | | | | |
| | " | B(iii) | | | | | . |
| | " | B(iv) | | | 20 | | 20 |
| | " | B(v) | 20 | | | | |
| | " | B(vi) | | 20 | | 20 | |
| | " | B(vii) | | | | | |
| | " | B(viii) | | | | | |
| | " | B(ix) | | | | | |
| | " | B(x) | | | | | |
| | Copolymer | C(i) | | | 10 | | |
| | " | C(ii) | | | | 50 | |
| | Glass fiber | D(i) | | | | | |

EP 0 468 462 A2

Table 2 (cont'd.)

| | | Comparative Example 9 | Comparative Example 10 | Comparative Example 11 | Comparative Example 12 |
|---|---|---|---|---|---|
| Composition | Polyamide (A) | 80 | 85 | 70 | 80 |
| | Graft copolymer B(i) | | | | |
| | " B(ii) | | | | |
| | " B(iii) | | | | |
| | " B(iv) | | | | |
| | " B(v) | | | | |
| | " B(vi) | | | | |
| | " B(vii) | | | | |
| | " B(viii) | | | | |
| | " B(ix) | 20 | | 20 | 20 |
| | " B(x) | | 15 | | |
| | Copolymer C(i) | | | 10 | |
| | " C(ii) | | | | |
| | Glass fiber D(i) | | | | 15 |

- to be continued -

EP 0 468 462 A2

Table 2 (cont'd.)

| | | Example 1 | Example 2 | Example 3 | Example 4 | Example 5 | Example 6 |
|---|---|---|---|---|---|---|---|
| Composition | Carbon fiber D(ii) | | | | | | 10 |
| | Talc D(iii) | | 3 | 20 | | | |
| Physical properties | Izod impact strength 23°C (kg·cm/cm) | 30 | 18 | 12 | 8 | 12 | 15 |
| | " -30°C (kg·cm/cm) | 15 | 10 | 6 | 5 | 7 | 8 |
| | Heat distortion temperature (°C) | 160 | $\geq$180 | $\geq$180 | 105 | $\geq$180 | $\geq$180 |
| | Heat stability $\Delta E$ | 2 | 2 | 2 | 2 | 2 | 2 |
| | Other | | | | | | |
| | Flexural modulus (kg·cm/cm) | 16,000 | 17,500 | 30,000 | 24,000 | 35,000 | 35,000 |

Table 2 (cont'd.)

| | | Example 7 | Example 8 | Comparative Example 1 | Comparative Example 2 | Comparative Example 3 |
|---|---|---|---|---|---|---|
| Composition | Carbon fiber D(ii) | | | | 3 | |
| | Taclc D(iii) | | | | | |
| Physical properties | Izod impact strength 23°C (kg·cm/cm) | 28 | 27 | 16 | 7 | 9 |
| | " −30°C (kg·cm/cm) | 15 | 13 | 8 | 3 | 5 |
| | Heat distortion temperature (°C) | 160 | 160 | 160 | $\geq$180 | 160 |
| | Heat stability ΔE | 2 | 2 | 2 | 2 | 2 |
| | Other | | | | | strong pearly luster |
| | Flexural modulus (kg·cm/cm) | 16,000 | 16,000 | 16,500 | 17,500 | 16,500 |

− to be continued −

18

Table 2 (cont'd.)

| | | Comparative Example 4 | Comparative Example 5 | Comparative Example 6 | Comparative Example 7 | Comparative Example 8 |
|---|---|---|---|---|---|---|
| Composition | Carbon fiber    D(ii) | | | | | 10 |
| | Talc    D(iii) | | | 20 | | |
| Physical properties | Izod impact strength 23°C (kg·cm/cm) | 15 | 10 | 3 | 3 | 5 |
| | "  −30°C (kg·cm/cm) | 8 | 2 | 2 | 1 | 2 |
| | Heat distortion temperature (°C) | 160 | 160 | $\geq$180 | 105 | $\geq$180 |
| | Heat stability ΔE | 2 | 2 | 2 | 2 | 2 |
| | Other | | | strong pearly luster | | |
| | Flexural modulus (kg·cm/cm) | 17,000 | 17,000 | 30,000 | 24,000 | 35,000 |

- to be continued -

EP 0 468 462 A2

Table 2 (cont'd.)

| | | Comparative Example 9 | Comparative Example 10 | Comparative Example 11 | Comparative Example 12 |
|---|---|---|---|---|---|
| Composition | Carbon fiber D(ii) | | | | |
| | Talc D(iii) | 16 | 3 | 20 | |
| Physical properties | Izod impact strength 23°C (kg·cm/cm) | 8 | 8 | 6 | 5 |
| | " −30°C (kg·cm/cm) | | 3 | 4 | 3 |
| | Heat distortion temperature (°C) | 160 | ≥180 | ≥180 | ≥180 |
| | Heat stability ΔE | 2 | 2 | 2 | 2 |
| | Other | | | | |
| | Flexural modulus (kg·cm/cm) | 16,000 | 17,500 | 30,000 | 35,000 |

## Claims

1. A thermoplastic resin composition comprising a blend obtained by blending the following components (A), (B) and (C):

    (A) 10 to 90 parts by weight of a polyamide,

    (B) 90 to 10 parts by weight of a compound rubber graft copolymer obtained by graft-polymerizing 5 to 13 parts by weight of at least one vinyl monomer (B-2) selected from the group consisting of vinyl cyanide monomers, aromatic vinyl monomers and (meth)acrylate monomers onto 87 to 95 parts by weight of a compount rubber (B-1), the total amount of (B-1) and (B-2) being 100 wt.% based on the compound rubber graft copolymer, the compound rubber (B-1) consisting of 10 to 90 wt.% of a polyorganosiloxane rubber component (b-1) and 90 to 10 wt.% of a polyalkyl (meth)acrylate rubber

20

component (b-2), the total amount of (b-1) and (b-2) being 100 wt.% based on the compound rubber (B-1), and the compound rubber (B-1) having such a structure that the both rubber components are not separable from each other, and

(C) 0 to 80 parts by weight of a polymer obtained by polymerizing at least one member selected from the group consisting of vinyl cyanide monomers, aromatic vinyl monomers and (meth)acrylate monomers, so that the total amount of the components (A), (B) and (C) is 100 parts by weight, and

(D) 0 to 100 parts by weight of a reinforcing filler.

2.   A thermoplastic resin composition according to Claim 1, wherein the amount of the polyamide (A) used is 30 to 80 parts by weight of 100 parts by weight of the total amount of the components (A), (B) and (C).

3.   A thermoplastic resin composition according to Claim 1, wherein organosiloxane constituting the polyorganosiloxane rubber component is a 3 to 6-membered cyclic compound.

4.   A thermoplastic resin composition according to Claim 1, wherein the main skeleton of the polyorganosiloxane rubber component has a repeating unit of dimethylsiloxane, and the main skeleton of the polyalkyl (meth)acrylate rubber component has a repeating unit of n-butyl acrylate.

5.   A thermoplastic resin composition according to Claim 1, wherein the amount of the compound rubber graft copolymer (B) used is 10 to 30 parts by weight of 100 parts by weight of the total amount of the components (A), (B) and (C).